## Europäisches Patentamt

## European Patent Office

## Office européen des brevets

(19)

(11) Veröffentlichungsnummer: **0 044 507**
**B1**

(12) **EUROPÄISCHE PATENTSCHRIFT**

(45) Veröffentlichungstag der Patentschrift:
**29.06.83**

(21) Anmeldenummer: **81105505.2**

(22) Anmeldetag: **14.07.81**

(51) Int. Cl.³: **B 29 B 1/00,** B 29 C 29/00,
B 09 B 3/00

(54) **Verfahren zur Wiederverwertung von mit Etiketten beklebten Kunststoffteilen.**

(30) Priorität: **18.07.80 DE 3027251**

(43) Veröffentlichungstag der Anmeldung:
**27.01.82 Patentblatt 82/4**

(45) Bekanntmachung des Hinweises auf die Patenterteilung:
**29.06.83 Patentblatt 83/26**

(84) Benannte Vertragsstaaten:
**AT BE CH FR GB IT LI NL SE**

(56) Entgegenhaltungen:
**AT-B-353 724**
**DE-A-2 550 958**
**DE-A-2 636 805**
**DE-A-2 803 859**
**DE-B-2 422 804**
**DE-B-2 424 158**
**US-A-4 043 019**

(73) Patentinhaber: **TYCZKA GmbH & Co. Gesellschaft für Gase, Wassertechnik, Engineering, Blumenstrasse 5, D-8192 Geretsried (DE)**

(72) Erfinder: **Tallafus, Ottmar, Am Himmelreich 14, D-6967 Buchen (DE)**

(74) Vertreter: **Trappenberg, Hans, Postfach 1909 Wendtstrasse 1, D-7500 Karlsruhe 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Wiederverwertung von mit Etiketten beklebten Kunststoffteilen

Die Erfindung betrifft ein Verfahren zur Wiederverwertung von mit Etiketten, insbesondere Papieretiketten beklebten Kunststoffteilen, bei dem die Kunststoffteile mit den anhaftenden Etiketten zerkleinert und die Etikettenanteile von dem Kunststoff abgelöst und abgetrennt werden (DE-B2-2 424 158).

Zur Wiederverwertung von Kunststoffen müssen die verschiedenen Kunststoffe voneinander separiert und auf alle Fälle muss das Papier aufgeklebter Papieretiketten entfernt werden. Könnte noch ein geringer Anteil eines andersartigen Kunststoffes bei der Wiederverwendung toleriert werden, so gilt dies nicht für Papier, das die Möglichkeit der Wiederverwertung des Kunststoffs für technisch anspruchsvolle Produkte ausschliesst; insbesondere trifft dies dann zu, wenn solche Kunststoffe mit Heisskanalwerkzeugen verarbeitet werden.

Um die Papieranteile zu entfernen, sind verschiedene Verfahren bekannt geworden. Das aufwendigste Verfahren besteht darin, die mit Papier beklebten Teile vor oder nach der Zerkleinerung der Kunststoffteile manuell auszusortieren. Eine weitere Möglichkeit besteht darin, die Teile in eine den Kleber durch das Papier hindurch auflösende Flüssigkeit zu tauchen und anschliessend, wiederum manuell, das Papier der Etiketten zu entfernen Diese Behandlungsmöglichkeit scheitert jedoch bei kunststoffbeschichteten oder metallisierten Papieren, da in diesen Fällen die Flüssigkeit nicht zum Kleber vordringen kann. Obendrein sind diese chemischen Verfahren nicht umweltfreundlich. Eine weitere Möglichkeit besteht noch darin, das Papier – wiederum manuell – von den Kunststoffteilen abzuschaben oder mit teuren, komplizierten und deshalb sehr störanfälligen Sondermaschinen Stück für Stück heiss abzubügeln.

Weiter bekannt ist es auch, derartige Etiketten durch Schrumpfung des Kunststoffmaterials abzulösen. Diese durch Erhitzen erreichte Schrumpfung verschlechtert jedoch das physikalische Niveau des Kunststoffmaterials, so dass es für hochwertige Produkte keinesfalls mehr brauchbar ist. Ausserdem lassen sich verschiedene unterschiedliche Kunststoffmaterialien durch ein derartiges Verfahren nicht voneinander trennen; auch Papier-Etiketten werden im allgemeinen nicht vollständig abgelöst.

Bekannt ist es auch noch, die Kunststoffteile zu zerkleinern, die Etiketten abzuschleifen oder mittels eines Lösungsmittels zu lösen und sodann die abgetrennten Etikettenteilchen in einem Nassverfahren vom Kunststoff zu trennen. Dieses Verfahren ist nicht nur aufwendig und schädigt durch die chemische Bearbeitung den Kunststoff, sondern es ist ebenfalls keine Garantie für die vollständige Abtrennung der Etiketten von dem Kunststoffmaterial gegeben.

All diesen Verfahren haftet somit nicht nur der Mangel an, dass die restlose Entfernung des Papiers von den Kunststoffteilen nicht gesichert werden kann, sondern auch, dass der verbleibende Kunststoff im allgemeinen zur Herstellung hochwertiger Produkte nicht mehr verwendbar ist. Ausserdem sind diese bekannten Verfahren sehr lohnintensiv, zeitraubend und störanfällig. Eine wirtschaftliche Wiederverwertung der Kunststoffteile war daher bisher nicht möglich.

Die Erfindung hat sich die Aufgabe gestellt, ein Verfahren anzugeben, wie derartige mit Etiketten, insbesondere Papieretiketten beklebten Kunststoffteile wiederverwertet werden können, wie also die Etikettenteile mit Sicherheit vom Kunststoff separiert werden können. In erfindungsgemässer Weise geschieht dies dadurch, dass die Kunststoffteile vor dem Zerkleinern auf die Versprödungstemperatur des Klebers abgekühlt werden und die Abtrennung der Etikettenanteile von dem Kunststoff im trockenen Zustand durch Sichten erfolgt.

Der entscheidende Schritt bei der Erfindung ist die Abkühlung der Kunststoffteile auf die Versprödungstemperatur des Klebers, wodurch sich die Etiketten spätestens beim anschliessenden Zerkleinern der Kunststoffteile von dem Kunststoff lösen und dann von den deutlich schwereren Kunststoffteilen unschwer separiert werden können. Dies gelingt insbesondere deshalb, weil die Etikettenpartikel durch die Kälteeinwirkung absolut trocken sind. Selbstverständlich ist es durchaus möglich, statt die Sichtung der Zerkleinerungseinrichtung nachzuschalten, diese bereits in der Zerkleinerungseinrichtung durchzuführen, da hier ja schon die Etiketten von dem Kunststoff getrennt werden.

Die Abkühlung der Kunststoffteile erfolgt zweckmässigerweise mit flüssigem Stickstoff, vorzugsweise in einem Gegenstromkühler, wobei auch die Zerkleinerungseinrichtung gekühlt sein kann. Der Zerkleinerungs- und Separiervorgang kann anschliessend nochmals wiederholt werden, um mit Sicherheit sämtliche, auch die kleinsten Etikettenanteile, von dem Kunststoff zu trennen bzw. um dem Kunststoff die gewünschte Granulatform zu geben.

An dem Beispiel der Wiederverwertung von Fotokassetten soll das erfindungsgemässe Verfahren erläutert werden:

Das wertvolle Kunststoffmaterial, zusammen mit den Metallanteilen von Fotokassetten, die in sehr grossen Stückzahlen bei den Film-Entwicklungsanstalten anfallen, konnte bisher nicht, auf jeden Fall nicht in wirtschaftlicher Art und Weise, wiederverwertet werden. Die Erfindung zeigt nun einen Weg auf, wie diese wertvollen Materialien, die ja aus immer knapperen Erdölprodukten hergestellt werden, einer Wiederverwertung zugeführt werden können.

Hierzu werden die Kassetten mittels flüssigem Stickstoff in an sich bekannten Einrichtungen soweit abgekühlt, bis zumindest der Kleber, mit dem die Etiketten auf dem Kunststoff aufgeklebt sind, versprödet. Der Vorbrecher, dem die abgekühlten Kassetten nun zugeleitet werden, zerbricht das Kunststoffmaterial der Kassetten in Stücke von $\leq 40$ mm Durchmesser. Bei diesem Vorbrechen, was zweckmässigerweise in einer Schlagmühle – Hammermühle oder Stiftmühle – durchgeführt wird, springen die Papieretiketten, da der Kleber vollkommen versprödet ist, von dem Kunststoffmaterial ab und können bereits bei dieser Vorzerkleinerung abgesaugt werden.

Anschliessend an das Vorbrechen erfolgt eine Sichtung des Materials, wobei wiederum mittels Windsichtung die leichten Papier- und Folienanteile abgesaugt werden und ausserdem Metallteile, wie Messingfedern und -Scheiben induktiv oder kapazitiv von dem Kunststoff separiert werden können. Das Ergebnis nach dieser Sichtung ist ein grob verkleinerter, von Fremdbestandteilen befreiter Kunststoff, der nunmehr einer Nachzerkleinerung zugeführt werden kann, bei der der Kunststoff auf Granulatgrösse von etwa 2 mm zerkleinert wird. Diese Nachzerkleinerung kann wiederum unter Abkühlung erfolgen, um die Zerkleinerungsarbeit zu erleichtern. Auch hier findet zweckmässigerweise nochmals ein Absaugen der leichten Bestandteile bzw. des Kunststoffstaubes statt.

Das Endprodukt ist ein sehr gut wiederverwertbares Kunststoffgranulat, das von sämtlichen Fremdbestandteilen befreit ist. Andererseits kann gegebenenfalls auch das Papier, insbesondere jedoch der separierte Metallanteil der Wiederverwertung zugeführt werden.

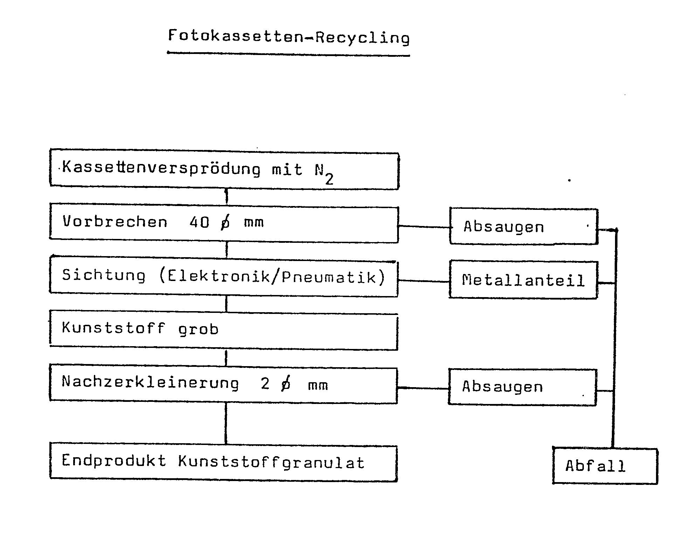

## Patentansprüche

1. Verfahren zur Wiederverwertung von mit Etiketten, insbesondere Papieretiketten beklebten Kunststoffteilen, bei dem die Kunststoffteile mit den anhaftenden Etiketten zerkleinert und die Etikettenanteile von dem Kunststoff abgelöst und abgetrennt werden, dadurch gekennzeichnet, dass die Kunststoffteile vor dem Zerkleinern auf die Versprödungstemperatur des Klebers abgekühlt werden und die Abtrennung der Etikettenanteile von dem Kunststoff in trockenem Zustand durch Sichten erfolgt.

2. Verfahren nach Anspruch 1, dadurch gekennzeichnet, dass die Abkühlung der Kunststoffteile mit flüssigen, tiefkalten Gasen, vorzugsweise Stickstoff, erfolgt.

3. Verfahren nach Anspruch 1 oder 2, dadurch gekennzeichnet, dass die Abkühlung der Kunststoffteile im Gegenstrom erfolgt.

4. Verfahren nach einem der Ansprüche 1 bis 3, dadurch gekennzeichnet, dass die Sichtung im aufsteigenden Luftstrom eines Windsichters erfolgt.

## Revendications

1. Procédé de recyclage de pièces en matière synthétique sur lesquelles sont collées des étiquettes, en particulier des étiquettes en papier, dans lequel on fragmente les pièces en matière synthétique portant les étiquettes adhérentes, on détache les fractions d'étiquettes de la matière synthétique et on les sépare, caractérisé en ce que l'on refroidit les pièces en matière synthétique, avant la fragmentation, à la température de fragilisation de l'adhésif, et en ce que l'on sépare à sec les fragments d'étiquette de la matière synthétique, par classement.

2. Procédé selon la revendication 1, caractérisé en ce que le refroidissement des pièces en matière synthétique s'effectue au moyen de gaz liquides très froids, de préférence d'azote.

3. Procédé selon l'une des revendications 1 et 2, caractérisé en ce que le refroidissement des pièces en matière synthétique s'effectue à contre-courant.

4. Procédé selon l'une des revendications 1 à 3, caractérisé en ce que le classement s'effectue dans le courant d'air ascendant d'un classeur pneumatique.

## Claims

1. A method of re-using plastics parts to which labels, in particular paper labels, have been stuck, in which the plastics parts with the adherent labels are crushed and the label portions are loosened and separated from the plastics, characterized in that, before crushing, the plastics parts are cooled to the embrittlement temperature of the adhesive and the separation of the label parts from the plastics occurs in the dry state by classification.

2. A method according to claim 1, characterized in that the cooling of the plastics parts occurs with liquid, low-temperature gases, preferably nitrogen.

3. A method according to claim 1 or 2, characterized in that the cooling of the plastics parts occurs in countercurrent.

4. A method according to any one of claims 1 to 3, characterized in that the classification occurs in the rising air current of an air classifier.

## Fotokassetten-Recycling

| | | |
|---|---|---|
| Kassettenversprödung mit $N_2$ | | |
| Vorbrechen 40 ø mm | Absaugen | |
| Sichtung (Elektronik/Pneumatik) | Metallanteil | |
| Kunststoff grob | | |
| Nachzerkleinerung 2 ø mm | Absaugen | |
| Endprodukt Kunststoffgranulat | | Abfall |